# EUROPEAN PATENT APPLICATION

(11) **EP 4 485 995 A1**
(43) Date of publication of application: **01.01.2025**
(21) Application number: 22934836.2
(22) Date of filing: 22.11.2022
(51) Int. Cl.: H04W 28/02

(54) **COMMUNICATION CONTROL METHOD, COMMUNICATION DEVICE AND MEDIUM**

(30) Priority: 28.03.2022 CN 202210315361
(71) Applicant: Huawei Technologies Co., Ltd., Shenzhen, Guangdong 518129 (CN)
(72) Inventor: LIU, Jie, Shenzhen, Guangdong 518129 (CN); ZHANG, Jun, Shenzhen, Guangdong 518129 (CN); ZHANG, Tinghua, Shenzhen, Guangdong 518129 (CN); YAO, Feng, Shenzhen, Guangdong 518129 (CN); LIU, Yong, Shenzhen, Guangdong 518129 (CN)
(74) Representative: Goddar, Heinz J.
(86) International application number: PCT/CN2022/133488
(87) International publication number: WO 2023/185018

(57) **Abstract**

This application relates to the field of communication technologies, and in particular, to a communication control method, a communication device, and a medium. In the method, a maximum RB resource that can be currently allocated by a to-be-tested base station is allocated to a terminal device communicating with the to-be-tested base station, so that the terminal device can transmit data to the to-be-tested base station at a network transmission rate corresponding to the maximum RB resource. Then, a MAC layer network transmission rate of the to-be-tested base station is monitored, to determine whether an event of transmitting data at a maximum network transmission rate occurs. If the event of transmitting data at the maximum network transmission rate occurs on the to-be-tested base station, it indicates that a network transmission function of the to-be-tested base station is normal. In the communication control method in this application, only the MAC layer network transmission rate of the to-be-tested base station needs to be monitored, and a transport network, a core network, or a remote control device is not involved. Therefore, this can greatly reduce a risk of a network attack on the transport network, the core network, and the like, and improve network security in a test process of the base station.

## Description

This application claims priority to Chinese Patent Application No. 202210315361.X, filed with the China National Intellectual Property Administration on March 28, 2022 and entitled "COMMUNICATION CONTROL METHOD, COMMUNICATION DEVICE, AND MEDIUM", which is incorporated herein by reference in its entirety.

### TECHNICAL FIELD

This application relates to the field of communication technologies, and in particular, to a communication control method, a communication device, and a medium.

### BACKGROUND

Services of base stations of the fifth generation mobile communication technology (fifth generation mobile networks, 5G) may be classified into delivery to business (to business, toB) and delivery to consumer (to consumer, toC). In a toB scenario, to test a service of a base station (that is, to monitor whether a network provided by a base station is normal), an on-site test can be manually performed on the base station, or a lightweight wireless terminal management (lightweight wireless terminal management, LTM) system is used to control a terminal that has accessed the base station to send a test packet to a remote server to test the base station.

However, the manual on-site manner has complex procedures in actual operations. For example, maintenance personnel usually need to submit applications to both an operator that provides a 5G service and an enterprise. In addition, some enterprises have complex internal production environments, such as a high-temperature environment in a steel mill and a crane operation at a port, and maintenance personnel may further require corresponding security qualifications. Therefore, the manual on-site manner is cumbersome and has low processing efficiency. The LTM manner is to control the terminal that has accessed the base station to send a test packet to the remote server to test the base station. According to a communication protocol between the terminal and the remote server, the test packet needs to be sent to the remote server through "base station-transport network-core network-transport network". In this process, the packet may be intercepted and used to launch network attacks on the transport network, the core network, and the remote server, affecting normal operation of the transport network, the core network, and the remote server. Therefore, a more secure and effective method for remotely testing the service of the base station is required.

### SUMMARY

To resolve the foregoing problem, this application provides a communication control method and a communication device. The following describes this in detail.

According to a first aspect, an embodiment of this application provides a communication control method. The method includes: A network management device sends a test instruction to a first network device, where the test instruction instructs the first network device to determine a test terminal from terminal devices that access a network provided by the first network device, and instructs the first network device to allocate a resource block RB of a first preset size to the test terminal device, so that the test terminal has a data transmission capability corresponding to the RB of the first preset size, and the RB of the first preset size is determined based on an available RB of the first network device. The network management device monitors a transmission rate of the first network device at which the test terminal transmits to-be-transmitted data to the first network device by using the data transmission capability corresponding to the RB of the first preset size, and determines, based on a monitoring result, whether the first network device is able to provide a network service that meets a first preset condition.

When detecting that the network transmission rate of the first network device has reached a first preset network transmission rate, the network management device determines that the first network device is able to provide the network service that meets the first preset condition.

When not detecting that the network transmission rate of the first network device has reached the first preset network transmission rate, the network management device determines that the first network device is unable to provide the network service that meets the first preset condition.

In some possible implementations, after receiving a buffer status report BSR sent by the test terminal, the first network device allocates the RB of the first preset size to the test terminal according to the test instruction.

In some possible implementations, that the RB of the first preset size is determined based on the available RB of the first network device means that in some cases, the first network device may also transmit data to another terminal device. That is, an RB resource of the first network device may be occupied by the another terminal device. In this case, the RB of the first preset size allocated to the test terminal is no longer all RBs of the first network device, but an available RB of the first network device.

In some possible implementations, the first preset network transmission rate may be a maximum network transmission rate corresponding to all the RBs of the first network device.

In some possible implementations, the to-be-transmitted data may be audio data, video data, text data, or the like. This is not limited in this application.

According to the foregoing method, a tester may send the test instruction to the first network device by using the network management device, so that the first network device determines, based on the test instruction, the test terminal from the terminal devices that access the network provided by the first network device, and the first network device allocates the RB of the first preset size to the test terminal according to the test instruction, so that the test terminal has the data transmission capability corresponding to the RB of the first preset size, and can send the to-be-transmitted data to the first network device at a network transmission rate corresponding to the RB of the first preset size. Then, when the test terminal sends the to-be-transmitted data to the first network device, the tester may monitor a network transmission rate on a first network device side by using the network management device, and then determine, based on the monitored network transmission rate, whether the first network device is able to provide the network service that meets the first preset condition.

That is, when the test terminal transmits data according to the data transmission capability corresponding to the RB of the first preset size, if the network transmission rate of the first network device can significantly increase until the network transmission rate of the first network device has reached the first preset network transmission rate, it indicates that a network service of the first network device meets the first preset condition, that is, the network service of the first network device is normal. When the test terminal transmits data according to the data transmission capability corresponding to the RB of the first preset size, if the network transmission rate of the first network device does not change significantly, and has not reached the first preset network transmission rate, it indicates that the network service of the first network device does not meet the first preset condition, that is, the network service of the first network device is abnormal.

In the foregoing method, because allocation of an RB by the first network device to the test terminal is determined based on a BSR value of a buffer status report BSR sent by the test terminal to the first network device, and BSR-related transmission between the test terminal and the first network device is between the test terminal and a MAC layer the first network device, the tester only needs to monitor a MAC layer network transmission rate of the first network device by using the network management device, and then determines, depending on whether the MAC layer network transmission rate has reached the first preset network transmission rate, whether the first network device is able to provide the network service the meets the first preset condition. It can be learned that, this manner is different from the remote test method described in the background, and does not involve a transport network, a core network, or a remote server. This can effectively reduce a possibility that the transport network, the core network, the remote server, and the like are vulnerable to network attacks, and improve test security of the base station.

With reference to the first aspect, in a possible implementation of the first aspect, the network service that meets the first preset condition includes: the network transmission rate of the first network device is greater than or equal to the network transmission rate corresponding to the RB of the first preset size. It may be understood that, as described above, the RB of the first preset size is determined based on the available RB of the first network device. That is, if the available RB of the first network device is all RBs of the first network device, that is, in this case, no terminal device other than the test terminal device in the terminal devices corresponding to the first network device occupies the RBs of the first network device, the network transmission rate corresponding to the RB of the first preset size is a maximum network transmission rate that can be provided by the first network device. In this case, the network transmission rate of the first network device is equal to the transmission rate corresponding to the RB of the first preset size. That is, it indicates that the network service provided by the first network device meets the first preset condition. If the RB of the first preset size allocated by the first network device to the test terminal is not all RBs of the first network device, the network transmission rate of the first network device is greater than the network transmission rate corresponding to the RB of the first preset size, and it may also be determined that the network service provided by the first network device meets the first preset condition.

With reference to the first aspect, in a possible implementation of the first aspect, the first network device includes a base station.

With reference to the first aspect, in a possible implementation of the first aspect, the test terminal device includes customer premise equipment CPE.

According to a second aspect, an embodiment of this application provides a communication control method. The method includes: A first network device receives a test instruction sent by a network management device, where the test instruction instructs the first network device to determine a test terminal from terminal devices that access the first network device, and instructs the first network device to allocate a resource block RB of a first preset size to the test terminal device, so that the test terminal has a data transmission capability corresponding to the RB of the first preset size, and the RB of the first preset size is determined based on an available RB of the first network device. When the test terminal transmits to-be-transmitted data to the first network device by using the data transmission capability corresponding to the RB of the first preset size, the first network device reports a transmission rate to the network management device, so that the network management device determines, based on the transmission rate reported by the first network device, whether the first network device is able to provide a network service that meets a first preset condition.

When the network transmission rate of the first network device has reached a first preset network transmission rate, it is determined that the first network device is able to provide the network service that meets the first preset condition.

When the network transmission rate of the first network device has reached the first preset network transmission rate, it is determined that the first network device is unable to provide the network service that meets the first preset condition.

That is, after receiving the test instruction sent by the network management device, the first network device selects, based on the test instruction, the test terminal from the terminal devices that access the network provided by the first network device, and allocates the RB of the first preset size to the test terminal according to the test instruction, so that the test terminal can transmit data according to the data transmission capability corresponding to the RB of the first preset size. Then, when the test terminal sends the to-be-transmitted data to the first network device, if the transmission rate of the first network device has reached the first preset network transmission rate, it indicates that a network service of the first network device meets the first preset condition. That is, the network service of the first network device is normal. If the transmission rate of the first network device has not reached the first preset network transmission rate, it indicates that the network service of the first network device does not meet the first preset condition. That is, the network service of the first network device is abnormal. For a part that is the same as that in the first aspect, refer to the foregoing related descriptions. Details are not described herein again.

With reference to the second aspect, in a possible implementation of the second aspect, the first network device allocates the resource block RB of the first preset size to the test terminal device in the following manner: After the first network device receives a first buffer status report BSR sent by the test terminal device, the first network device modifies, based on the test instruction to a first preset value, a first BSR value of the received first BSR sent by the test terminal; and the first network device allocates, an RB of the first preset size corresponding to the first preset value to the test terminal device. That is, as described above, the first network device determines, based on the BSR sent by the test terminal to the first network device, to allocate the RB of the first preset size to the test terminal. Therefore, after receiving the test instruction and the first BSR reported by the test terminal, the first network device modifies, based on the test instruction, the first BSR value in the first BSR reported by the test terminal to the first preset value, and then allocates the RB of the first preset size to the test terminal based on the first preset value. In some possible implementations, the first preset value may be determined by the first network device based on all RBs of the first network device, or may be determined by the first network device based on a remaining RB or an available RB of the first network device. This is not limited in this application.

With reference to the second aspect, in a possible implementation of the second aspect, the first preset network transmission rate is greater than or equal to a network transmission rate corresponding to the first preset RB.

With reference to the second aspect, in a possible implementation of the second aspect, the first network device includes a base station.

With reference to the second aspect, in a possible implementation of the second aspect, the test terminal device includes customer premise equipment CPE.

According to a third aspect, an embodiment of this application provides a communication control method. The method includes: A network management device sends a test instruction to a first network device, where the test instruction instructs the first network device to determine a test terminal from terminal devices that access a network provided by the first network device, and instructs the first network device to allocate a resource block RB of a first preset size to the test terminal device, so that the test terminal has a data transmission capability corresponding to the RB of the first preset size, and the RB of a first preset size is determined based on an available RB of the first network device. The first network device receives the test instruction, and after receiving a first BSR sent by the test terminal, the first network device allocates the RB of the first preset size to the test terminal according to the test instruction.

When the test terminal transmits to-be-transmitted data to the first network device by using the network transmission capability corresponding to the RB of the first preset size, the first network device reports a transmission rate to the network management device, and the network management device determines, based on the transmission rate reported by the first network device, whether the first network device is able to provide a network service that meets a first preset condition.

When determining that the network transmission rate of the first network device has reached a first preset network transmission rate, the network management device determines that the first network device is able to provide the network service that meets the first preset condition.

When determining that the network transmission rate of the first network device has not reached the first preset network transmission rate, the network management device determines that the first network device is unable to provide the network service that meets the first preset condition.

With reference to the third aspect, in a possible implementation of the third aspect, the first network device allocates the resource block RB of the first preset size to the test terminal device in the following manner:

After the first network device receives the first buffer status report BSR sent by the test terminal device, the first network device modifies, to a first preset value based on the test instruction, a first BSR value of the received first BSR sent by the test terminal.

The first network device allocates an RB of the first preset size corresponding to the first preset value to the test terminal device.

With reference to the third aspect, in a possible implementation of the third aspect, the first preset network transmission rate is greater than or equal to a network transmission rate corresponding to the first preset RB.

With reference to the third aspect, in a possible implementation of the third aspect, the method further includes: The network management device sends a test instruction to a second network device, where the second network device is a collaborative device of the first network device, the test instruction also instructs the second network device to allocate a resource block RB of a second preset size to the test terminal device, so that the test terminal has a data transmission capability corresponding to the RB of the second preset size when transmitting data to the second network device, and the RB of the second preset size is determined based on an available RB of the second network device. The second network device receives the test instruction, and after receiving a second BSR sent by the test terminal, allocates the RB of the second preset size to the test terminal according to the test instruction. When the test terminal transmits to-be-transmitted data to the second network device by using the network transmission capability corresponding to the RB of the second preset size, the second network device reports a transmission rate to the network management device.

The network management device determines, based on the transmission rate reported by the second network device, whether the second network device is able to provide a network service that meets a second preset condition.

When determining that the network transmission rate of the second network device has reached a second preset network transmission rate, the network management device determines that the second network device is able to provide the network service that meets the second preset condition.

When determining that the network transmission rate of the second network device has not reached the second preset network transmission rate, the network management device determines that the second network device is unable to provide the network service that meets the second preset condition.

That is, in a device collaboration scenario, that is, in a scenario in which two or more base stations simultaneously provide a network service for the test terminal device, a manner of testing, by using the test terminal, whether network services of the base stations are normal is similar to a manner of testing one base station by using the test terminal. A difference lies in that when a collaborative device allocates an RB to the test terminal according to a test instruction, the collaborative device allocates an RB of the second preset size to the test terminal based on an available RB of the collaborative device, so that the test terminal has a data capability corresponding to the RB of the second preset size when transmitting data to the collaborative device. Finally, when the test terminal transmits data to the collaborative device, whether a network service provided by the collaborative device is normal is determined by monitoring a network transmission rate of the collaborative device. For a specific determining method, refer to the foregoing related descriptions. Details are not described herein again.

With reference to the third aspect, in a possible implementation of the third aspect, the second preset network transmission rate is greater than or equal to a network transmission rate corresponding to the second preset RB. It may be understood that, as described above, the second preset RB may be all RBs of the collaborative device, or may be a remaining RB of the collaborative device. If the second preset RB is all RBs of the collaborative device, the second preset network transmission rate is equal to the network transmission rate corresponding to the second preset RB. If the second preset RB is a remaining RB of the collaborative device, the second preset network transmission rate is greater than the second preset RB.

With reference to the third aspect, in a possible implementation of the third aspect, the method further includes: A third network device detects that the test terminal device accesses a network provided by the third network device. The network management device tests the third network device by using the test terminal device, and sends a test instruction to the third network device, where the test instruction also instructs the third network device to allocate a resource block RB of a third preset size to the test terminal device, so that the test terminal has a data transmission capability corresponding to the RB of the third preset size when transmitting data to the third network device, and the RB of the third preset size is determined based on an available RB of the third network device. The third network device receives the test instruction, and after receiving a third BSR sent by the test terminal, allocates the RB of the third preset size to the test terminal according to the test instruction. When the test terminal transmits to-be-transmitted data to the third network device by using the network transmission capability corresponding to the RB of the third preset size, the third network device reports a transmission rate to the network management device.

The network management device determines, based on the transmission rate reported by the third network device, whether the third network device is able to provide a network service that meets a third preset condition.

When determining that the network transmission rate of the third network device has reached a third preset network transmission rate, the network management device determines that the network device is able to provide the network service that meets the third preset condition.

When determining that the network transmission rate of the third network device has not reached the third preset network transmission rate, the network management device determines that the network device is unable to provide the network service that meets the third preset condition.

That is, a test method of testing, by using the test terminal, whether a network service of another base station is normal is also similar to the test manner of using the test terminal. For details, refer to the foregoing related descriptions. A difference lies in that, because terminal devices corresponding to the third network device do not include the test terminal, the third network device needs to detect whether the test terminal accesses a network service provided by the third network device. A specific manner varies slightly with a networking manner of the base station. For details, refer to related descriptions in the following specific embodiments. No explanation is provided herein. After the third network device detects that the test terminal accesses the network service provided by the third network device, the network service of the third network device may be tested by using the test terminal in the foregoing test manner.

With reference to the third aspect, in a possible implementation of the third aspect, the third preset network transmission rate is greater than or equal to a network transmission rate corresponding to a third preset RB. It may be understood that the third preset RB may be all RBs of the third network device, or may be a remaining RB of the third network device. If the third preset RB is all RBs of the third network device, the third preset network transmission rate is equal to the network transmission rate corresponding to the third preset RB. If the third preset RB is a remaining RB of the third network device, the third preset network transmission rate is greater than the third preset RB.

With reference to the third aspect, in a possible implementation of the third aspect, the first network device includes a base station.

With reference to the third aspect, in a possible implementation of the third aspect, the second network device includes a base station.

With reference to the third aspect, in a possible implementation of the third aspect, the third network device includes a base station.

With reference to the third aspect, in a possible implementation of the third aspect, the test terminal device includes customer premise equipment CPE.

According to a fourth aspect, an embodiment of this application further provides a communication device. The communication device includes a memory that stores computer program instructions, and a processor. The processor is coupled to the memory, and when the computer program instructions stored in the memory are executed by the processor, the communication device is enabled to implement the communication control method in any possible implementation of any one of the foregoing aspects.

According to a fifth aspect, an embodiment of this application provides a computer-readable storage medium. The computer-readable storage medium stores a computer program, and when the computer program is executed by a processor, the communication control method in any one possible implementation of any one of the foregoing aspects is implemented.

According to a sixth aspect, an embodiment of this application provides a computer program product. When the computer program product runs on an electronic device, the electronic device is enabled to perform the communication control method in any possible implementation of any one of the foregoing aspects.

It may be understood that, for beneficial effects of the second aspect to the sixth aspect, refer to related descriptions in the first aspect. Details are not described herein again.

### BRIEF DESCRIPTION OF DRAWINGS

FIG. 1 is a diagram of an application scenario to which a method in this application is applicable according to an embodiment of this application;
FIG. 2 is a diagram of another application scenario to which a method in this application is applicable according to an embodiment of this application;
FIG. 3 is a diagram of still another application scenario to which a method in this application is applicable according to an embodiment of this application;
FIG. 4 is a diagram of a change of a network transmission rate observed on a base station side when a base station is tested by using a method in this application, where a horizontal axis represents time, and a vertical axis represents a network transmission rate;
FIG. 5 is a schematic interaction flowchart for implementing a method in this application according to an embodiment of this application;
FIG. 6 shows a BSR format used in an embodiment of this application;
FIG. 7 is a diagram of still another application scenario to which a method in this application is applicable according to an embodiment of this application;
FIG. 8a is a diagram of an application scenario to which a method in this application is applicable in an NSA scenario according to an embodiment of this application;
FIG. 8b is a diagram of an application scenario to which a method in this application is applicable in an SA scenario according to an embodiment of this application;
FIG. 9 is a schematic interaction flowchart of the method used in this application in the scenario shown in FIG. 8a;
FIG. 10 is a schematic interaction flowchart of the method used in this application in the scenario shown in FIG. 8b;
FIG. 11 is another schematic interaction flowchart of the method used in this application in the scenario shown in FIG. 8b; and
FIG. 12 is a diagram of a structure of a communication device that can implement a method in this application according to an embodiment of this application.

### DESCRIPTION OF EMBODIMENTS

Aspects of the illustrative embodiments are described below using terms commonly used by a person skilled in the art. For ease of understanding, some technical terms and concepts in this application are first described.

Customer premise equipment (customer premise equipment, CPE) is a mobile signal access terminal device that can forward a mobile signal as a wireless network signal. For example, a high-speed 4G/5G signal is converted to a wireless fidelity (wireless fidelity, Wi-Fi) signal. The CPE supports a large quantity of mobile terminals that can access the internet at the same time, and may be widely used in rural areas, towns, hospitals, offices, factories, residential areas, and the like for wireless network access, to save broadband costs and eliminate cabling. In embodiments of this application, an example in which CPE that accesses a base station is used to test the base station is used for description.

Buffer status reporting (buffer status reporting, BSR) is a manner in which a terminal device applies for a resource block (resource block, RB) from a network device, for example, a base station. After the terminal device reports a BSR to the network device, the network device may schedule an RB resource for the terminal device based on an amount of to-be-transmitted data. If the status BSR reported by the terminal device is 0, the network device no longer schedules an RB resource for the terminal device. In some implementations, a periodicity in which the terminal device reports the BSR to the network device is usually about 10 milliseconds. That is, the terminal device reports the BSR to the network device every 10 milliseconds, to request the network device to allocate an RB resource. Generally, the BSR includes three types: a short (short) BSR, a truncated (truncated) BSR, and a long (long) BSR. In embodiments of this application, for ease of description, a short BSR is used as an example for description. When the terminal device reports the short BSR to the network device, a value of a BSR field indicates a size of an amount of to-be-transmitted data of the terminal device. The BSR field usually occupies 6 bits, and the value of the BSR field ranges from 0 to 63. The value of the BSR field and the amount of the to-be-transmitted data may be determined based on a preset mapping relationship between a value of a BSR field and a data amount. This is not limited in this application. For example, if a value of the BSR is 8, it indicates that the data amount of the to-be-transmitted data of the terminal device ranges from 26 bytes to 31 bytes. In this case, the network device allocates an RB resource of a proper size to the terminal device based on the value. The to-be-transmitted data includes but is not limited to text data, video data, audio data, and the like.

It may be understood that during actual application, even after the terminal device sends the BSR to the network device, the network device may not have enough RB resources to allocate to the terminal device, and the terminal device also requires an RB resource to send the BSR. If the terminal device does not have an RB resource in this case, and even fails to send the BSR, the terminal device may obtain the RB resource in another manner, for example, send an uplink scheduling request (scheduling request, SR) to the network device, or initiate contention-based random access to obtain the RB resource. If RB resources allocated by the network device to the terminal device are insufficient, the terminal device continuously requests an RB resource from the network device until the terminal device completes sending of the to-be-transmitted data. This is not limited in this application. In embodiments of this application, for ease of description, it is assumed that the terminal device has a capability of sending the BSR to the network device, that is, the terminal device has an RB resource required for sending the BSR to the network device.

The following describes a specific implementation process of embodiments of this application with reference to the accompanying drawings.

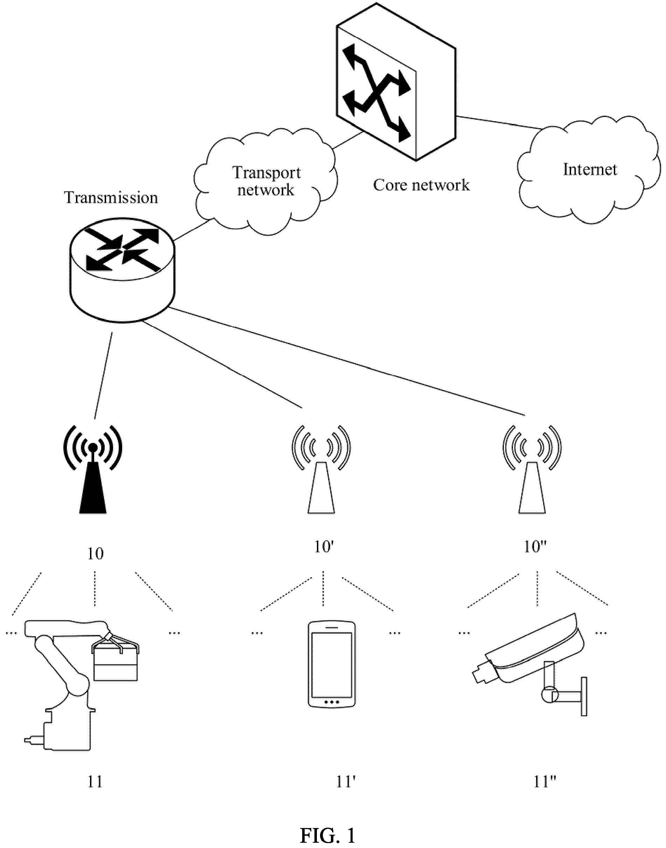

FIG. 1 is a diagram of an application scenario to which a method in this application is applicable. As shown in FIG. 1, a plurality of terminal devices, for example, a CPE, a mobile phone, or a device such as a mechanical arm or a camera integrated with a CPE assembly may access each of a base station 10, a base station 10', and a base station 10". After accessing the base station, the devices may access the internet via a network provided by the base station through a transport network and a core network, to implement network functions such as remote control and data uploading/downloading. For example, a user may remotely control a mechanical arm to load and unload goods, or a user browses a web page, watches a video, or plays a game by using a mobile phone, or uploads a vehicle/people flow status captured by a camera to a server. The CPE assembly is a module integrated with an air interface communication function, and may implement some functions of a CPE device, for example, converting a 4G/5G network into a wireless network.

To ensure that a network service provided by the base station can run normally, the base station is usually tested. As described above, specific test methods include a manual on-site test and a remote test.

In the manual on-site test method, maintenance personnel need to enter a factory or a campus to perform a test. However, an actual environment of the factory or the campus is complex, and a procedure for the maintenance personnel to enter the factory or the campus is cumbersome. This affects efficiency of a service test of the base station.

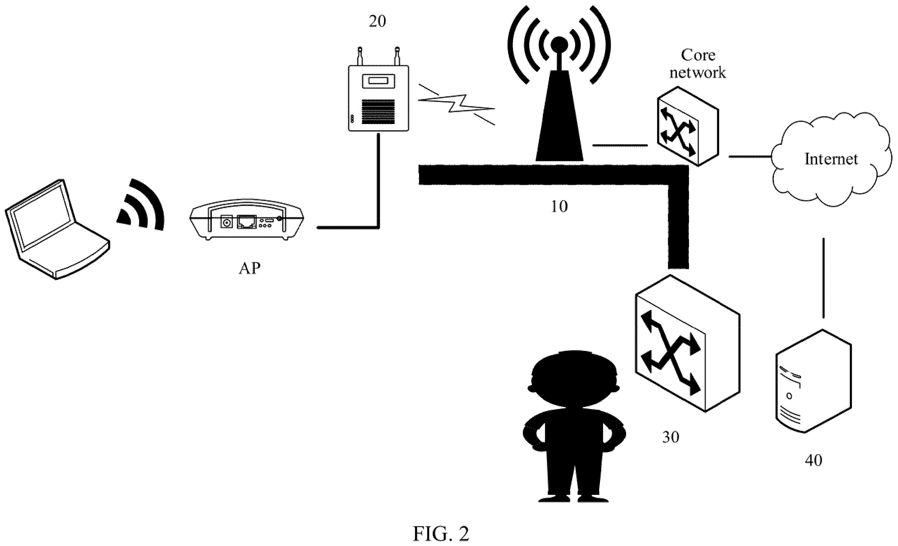

In the remote test method, as shown in FIG. 2, a user needs to control, by using an LTM 30, CPE 20 that accesses the base station 10 to send a test packet to a remote server 40, where a destination address of the test packet is an internet protocol address (internet protocol address, IP address) of the remote server 40, and a source address is an IP address of the CPE 20; and then monitor, by using the LMT 30, whether a data packet passing through the base station 10 meets a preset condition to determine whether a service of the base station 10 is normal. For example, whether an uplink data rate reflected by a data packet passing through the base station 10 is greater than a threshold is considered. If the uplink data rate is greater than the threshold, it is considered that a service of the base station 10 runs normally, that is, a network service (or a network transmission function) of the base station 10 is normal. Setting of the threshold is related to a maximum uplink rate that can be provided by the base station 10. For example, if the maximum uplink rate that can be provided by the base station 10 is 100 megabits per second (bits per second), a value of the threshold may be 100 Mbps.

However, as described above, when the remote test method is used, the test packet is sent to the remote server 40 through "base station-transport network-core network-transport network" according to the transmission control protocol (transmission control protocol, TCP), and the test packet includes a destination address (the IP address of the remote server 40) and a source address (the address of the terminal CPE). In this process, if the test packet is intercepted, the IP address is leaked, and may be exploited to cause a network attack on the transport network, the core network, and the remote server 40. Consequently, security of a service test of the base station is poor.

To resolve the foregoing technical problem, this application provides a communication control method. In the communication control method in this application, a maximum RB resource (corresponding to a maximum network transmission rate of a to-be-tested base station) that can be currently allocated by the to-be-tested base station is allocated to a terminal device communicating with the to-be-tested base station, so that the to-be-tested base station has a possibility of transmitting data at the maximum network transmission rate. Then, whether a network transmission function of the to-be-tested base station is normal is determined by monitoring whether an event of transmitting data at the maximum network transmission rate occurs on the to-be-tested base station. The event of transmitting data at the maximum network transmission rate means whether a network transmission rate of the to-be-tested base station has reached a preset network transmission rate in a test process, for example, whether the network transmission rate of the base station has reached the maximum network transmission rate.

Specifically, a network control device may select a terminal device from terminal devices that send BSRs to the to-be-tested base station as a test terminal device, and then send a test instruction to the to-be-tested base station, so that the to-be-tested base station allocates a maximum RB resource to the selected test terminal device, and the test terminal device has a capability of transmitting data to the to-be-tested base station at the maximum network transmission rate, that is, the to-be-tested base station has a possibility of transmitting data at the maximum network transmission rate. Then, terminal devices (including the test terminal device) that transmit data through the to-be-tested base station send data to the to-be-tested base station at respective network transmission rates. Because the test terminal device has a capability of transmitting data to the to-be-tested base station at the maximum network transmission rate, and other terminal devices that transmit data through the to-be-tested base station transmit data, if a network transmission function of the to-be-tested base station is normal, in this process, it may be detected that the network transmission rate of the to-be-tested base station has reached the preset network transmission rate; and if the network transmission function of the to-tested base station is abnormal, the to-be-tested base station cannot transmit data at the maximum network transmission rate, that is, it cannot be detected that the network transmission rate of the to-be-tested base station has reached the maximum network transmission rate.

Specifically, in the communication control method in this application, a remote control device may control the to-be-tested base station, to determine at least one terminal device that currently accesses the to-be-tested base station, and select a terminal device from the at least one terminal device as a test terminal device. Then, the to-be-tested base station sends a test instruction to the test terminal device. After receiving the test instruction, the test terminal device sends a BSR to the to-be-tested base station to request an RB resource. After receiving the BSR, the to-be-tested base station adjusts a value of the BSR to a first preset value, and allocates an RB resource to the test terminal based on the first preset value. Then, the test terminal sends data to the to-be-tested base station based on the allocated RB resource. Because the BSR is transmitted between the terminal device and a media access control (media access control, MAC) layer of the to-be-tested base station, in this case, only whether a MAC layer network transmission rate of the to-be-tested base station is greater than a second preset value needs to be monitored. If the network transmission rate is greater than the second preset value, it indicates that the network transmission function of the base station is normal.

Setting of the first preset value is related to a maximum uplink rate that can be provided by the base station. For example, if the maximum uplink rate that can be provided by the base station is 200 Mbps, a value of the first preset value may be 200 Mbps. This is not limited in this application. In some embodiments, the second preset value may be less than or equal to the first preset value. For example, when the first preset value is 200 Mbps, the second preset value may be 98% of the first preset value, that is, 196 Mbps, or the second preset value is 200 Mbps.

It can be learned that, in the communication control method in this application, the BSR sent by the test terminal device and the subsequently sent data are mainly transmitted between the test terminal device and the MAC layer of the base station, and a transport network, a core network, or a remote control device is not involved. This can greatly reduce a risk of a network attack on the transport network, the core network, and the like, and improve network security in a test process of the base station. In addition, the communication control method in this application is remote control, and maintenance personnel do not need to perform an on-site test, also improving test efficiency of the base station.

It may be understood that, during actual application, there may be no terminal device that accesses the to-be-tested base station. In this case, a movable terminal device may be remotely controlled to move to a network coverage area of the to-be-tested base station, and access a network provided by the to-be-tested base station, and then a service of the base station is tested by using the movable terminal device. In some implementations, the movable terminal device may be a vehicle-mounted terminal device, for example, vehicle-mounted CPE. In another implementation, a terminal device may be transported to the network coverage area of the to-be-tested base station by remotely controlling an automated guided vehicle (automated guided vehicle, AGV), and access the network provided by the to-be-tested base station, and then a service of the base station is tested by using the test terminal. This is not limited in this application.

In addition, during actual application, the test terminal device may not have enough to-be-transmitted data to occupy an RB resource corresponding to the first preset value. In this case, the test terminal automatically sends a pending (PENDING) packet to the base station at the MAC layer, to occupy the RB resource allocated by the base station. In this case, the test terminal may also monitor a change of the MAC layer network transmission rate of the base station, and determine whether a current network transmission rate is greater than the second preset value. If the network transmission rate is greater than the second preset value, it indicates that the service of the base station runs normally.

The test terminal device may be CPE or another terminal device integrated with the CPE, for example, a mechanical arm, a camera, or an AGV car integrated with the CPE, or may be a terminal device such as a smartphone or a tablet computer that can access a network of a base station. A type of the test terminal device is not limited in this application. For ease of description, the following uses an example in which the test terminal is the CPE.

The remote control device may be a network management device corresponding to the base station. This is not limited in this application, and the following uses this as an example for description.

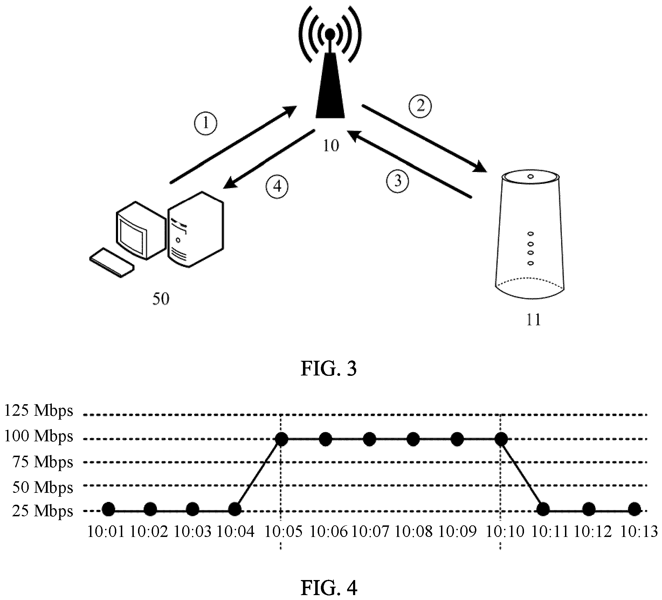

The following describes a specific implementation process of the communication control method in this application with reference to FIG. 3 to FIG. 11.

FIG. 3 is a diagram of another scenario to which a communication control method is applicable according to this application. As shown in FIG. 3, a base station 10, a network management device 50, and test CPE 11 are included. A user controls the base station 10 by using the network management device 50, determines the test CPE 11 connected to the base station 10, and then sends a test instruction (T) to the base station 10 through the network management device 50. After receiving the test instruction, the base station 10 sends the test instruction ② to the test CPE 11. After receiving the test instruction, the test CPE 11 sends a BSR to the base station 10 to request the base station 10 to allocate an RB resource ③. The base station 10 modifies the BSR sent by the test CPE 11 to a first preset value, and allocates an RB resource corresponding to the first preset value to the test CPE 11. Then, the test CPE 11 occupies the RB resource, and sends to-be-transmitted data to the base station 10. Finally, the user monitors a value (4) of a MAC layer data transmission rate of the base station 10 by using the network management device 50. If the MAC layer data transmission rate is greater than a second preset value, it is determined that a service of the base station 10 runs normally.

FIG. 4 shows a change of the MAC layer data transmission rate in the foregoing communication control process. A horizontal axis represents time, and a vertical axis represents the MAC layer data transmission rate. As shown in FIG. 4, at 10:05, the test CPE 11 uploads data based on a maximum RB resource allocated by the base station 10 to the test CPE 11. In this case, the network management device 50 detects that the MAC layer data transmission rate of the base station 10 is 100 Mbps. It is assumed that the second preset value is 150 Mbps. Because the monitored MAC layer data transmission rate of the base station 10 is 100 Mbps, and is less than the second preset value, it indicates that the test CPE 11 cannot transmit data based on the maximum RB resource that can be provided by the base station 10. That is, a service provided by the base station 10 is abnormal. In some implementations, a reason for a service abnormality of the base station 10 includes but is not limited to: interference on a communication link between the base station 10 and the test CPE 11 affects an upload rate of the test CPE 11; or interference between the base station 10 and another base station affects normal running of the service of the base station 10. A reason for the service abnormality of the base station 10 is not limited in this application.

It is assumed that the second preset value is 90 Mbps. Because the monitored MAC layer data transmission rate of the base station 10 is 100 Mbps, and is greater than the second preset value, it indicates that the test CPE 11 can transmit data based on the maximum RB resource provided by the base station 10. That is, a service provided by the base station 10 can run normally.

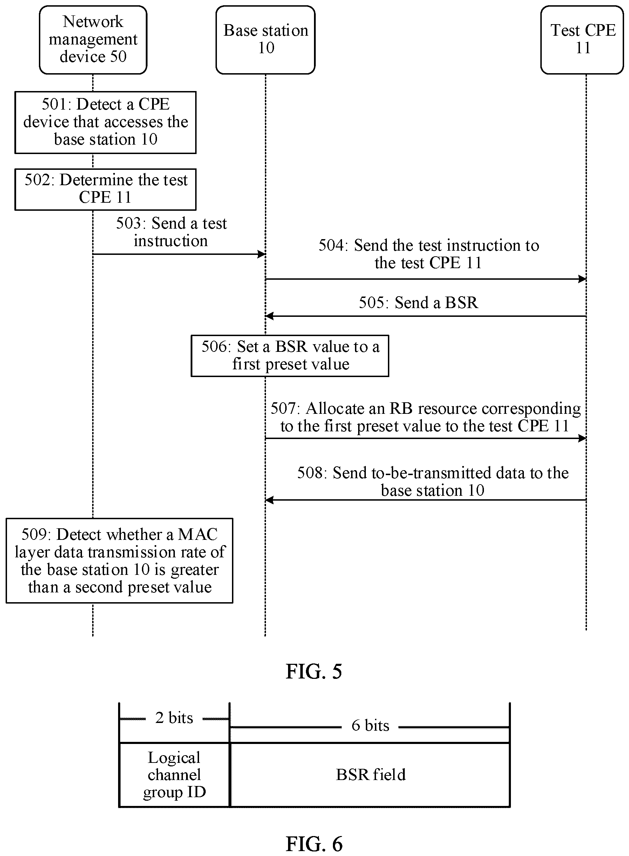

To better understand an implementation process of the solution in this application, the following describes a communication control method provided in this application with reference to an interaction process between the test CPE 11, the base station 10, and the network management device 50 in the foregoing communication control process. As shown in FIG. 5, the process includes the following steps:
501: The network management device 50 detects a CPE device that accesses the base station 10.

It may be understood that, before accessing the base station 10, the CPE device registers a unique identifier such as a temporary mobile subscriber identity (temporary mobile subscriber identity, TMSI) or a trace ID (trace ID) with a core network. Therefore, in some implementations, the network management device 50 may obtain, through a man-machine language (Man-Machine Language) interface, an identifier of a CPE device that accesses the base station 10, and then determine an accessed CPE device. The MML interface is a service system interface in a communication service, and information about a terminal device that currently accesses the base station 10 can be queried through the interface, for example, the identifier of the CPE device.

502: The network management device 50 determines the test CPE 11.

After determining the CPE device accessing the base station 10, the network management device 50 may further determine the test CPE 11 for testing whether a service of the base station 10 runs normally. In some implementations, the network management device 50 may randomly select a CPE device as the test CPE 11. A manner of selecting the CPE device as the test CPE 11 is not limited in this application.

503: The network management device 50 sends a test instruction to the base station 10.

504: The base station 10 sends the test instruction to the test CPE 11. That is, after determining the test device CPE 11, the network management device 50 controls the base station 10 to send the test instruction to the test CPE 11.

505: The test CPE 11 sends a BSR to the base station 10. As described above, before sending to-be-transmitted data, each terminal device such as CPE sends a BSR to a network device such as the base station 10, to request the base station 10 to allocate a corresponding RB resource for the terminal device such as the CPE to transmit data. Therefore, after receiving the test instruction, the test CPE 11 also sends a BSR to the base station 10, to request the base station 10 to allocate a corresponding resource. In some implementations, the BSR sent by the test CPE 11 to the base station 10 may be a BSR corresponding to a data amount of to-be-transmitted data of the test CPE 11. For example, a short BSR is used as an example. For a format of the short BSR, refer to FIG. 6. That is, a logical channel group number corresponding to the BSR occupies 2 bits and indicates a data transmission channel, and a BSR field occupies 6 bits and indicates the data amount of the to-be-transmitted data. Specifically, if the data amount of the to-be-transmitted data ranges from 26 bytes to 31 bytes, the value of the corresponding BSR field is 8.

506: The base station 10 sets a BSR value to a first preset value. Because the base station 10 has received the test instruction, after receiving the BSR sent by the test CPE 11, the base station 10 modifies the BSR value to the first preset value corresponding to a maximum network transmission rate that can be provided by the base station 10 when the service runs normally, for example, 100 Mbps, to determine whether the test CPE 11 can transmit the to-be-transmitted data based on the maximum network transmission rate subsequently. If the test CPE 11 can transmit data based on the maximum network transmission rate, it indicates that the service of the base station 10 can run normally, and if the test CPE 11 cannot transmit data based on the maximum network transmission rate, it indicates that the service of the base station 10 is abnormal. For a related definition of the first preset value, refer to the foregoing related descriptions. Details are not described herein again.

507: The base station 10 allocates an RB resource corresponding to the first preset value to the test CPE 11. The base station 10 allocates an RB resource to the test CPE 11 based on the first preset value, so that the test CPE 11 can transmit data to the base station 10 at the maximum transmission rate.

508: The test CPE 11 sends the to-be-transmitted data to the base station 10. If the test CPE 11 has sufficient data to occupy an RB resource corresponding to the maximum transmission rate, the test CPE 11 directly sends the to-be-transmitted data to the base station 10 at the maximum transmission rate. If the test CPE 11 does not have sufficient data to occupy the RB resource corresponding to the maximum transmission rate, the test CPE 11 sends a PENDING packet to the base station 10 to occupy the RB resource. However, in either case, in a process in which the test CPE 11 sends the to-be-transmitted data to the base station 10, a change (from low to high) of a data amount or a transmission rate may be monitored at a MAC layer of the base station 10.

509: The network management device 50 monitors whether a MAC layer data transmission rate of the base station 10 is greater than a second preset value. That is, when the test CPE 11 sends the to-be-transmitted data to the base station 10 at the maximum transmission rate, it may be monitored whether the MAC layer data transmission rate of the base station 10 is greater than the second preset value. If the MAC layer data transmission rate is greater than the second preset value, it indicates that the service of the base station 10 can run normally. If the MAC layer data transmission rate is less than the second preset value, it indicates that the service of the base station 10 is abnormal.

According to the foregoing method, the network management device 50 may remotely control the base station 10, and the service of the base station 10 is tested by using a CPE device that accesses the base station 10. In addition, in the foregoing method, the BSR, the to-be-transmitted data, and the like that are sent by the test CPE 11 are not further sent to a core network through a transport network, but are sent to only the base station 10. This reduces a possibility that network devices such as the core network and the transport network are vulnerable to network attacks, and improves test security of the base station.

In the foregoing method, an example in which the CPE device accesses one base station 10 and tests the service of the base station 10 is used. It may be understood that the method in this application is also applicable to a scenario in which the CPE device accesses a plurality of base stations at the same time and then tests services of the plurality of base stations. A difference between the method and the communication control method in which the CPE device accesses one base station 10 lies in that after receiving BSRs sent by the CPE device, the plurality of base stations 10 modify the received BSRs based on maximum networks that can be provided by the plurality of base stations.

For example, in an inter-station collaboration scenario, to ensure smoother network access of a terminal and improve user experience, two base stations are generally used to provide a network for the terminal device. One base station is referred to as a master base station, and the other base station is referred to as a collaborative base station. In this case, the network management device 50 may control the master base station and the collaborative base station, and send a test instruction to each of the master base station and the collaborative base station. Then, the master base station and the collaborative base station each send a test instruction to the CPE device. The CPE device sends BSRs to the master base station and the collaborative base station. The master base station modifies a received BSR value to a third preset value based on a maximum network transmission rate that can be provided by the master base station, and the collaborative base station modifies a received BSR value to a fourth preset value based on a maximum network transmission rate that can be provided by the collaborative base station. Then, the network management device 50 may monitor whether MAC layer transmission rates of the master base station and the collaborative base station each meet a condition, to determine whether network services provided by the master base station and the collaborative base station are normal.

For example, assuming that the maximum network transmission rate that can be provided by the master base station is 100 Mbps, and the maximum network transmission rate that can be provided by the collaborative base station is 200 Mbps, a value of the third preset value may be 100 Mbps, and a value of the fourth preset value may be 200 Mbps. Then, the CPE device sends to-be-transmitted data to the master base station based on an RB resource allocated by the master base station to the CPE device, and sends to-be-transmitted data to the collaborative base station based on an RB resource allocated by the collaborative base station to the CPE device. Finally, the network management device 50 separately monitors whether a MAC layer data transmission rate of the master base station is greater than a fifth preset value and whether a MAC layer data transmission rate of the collaborative base station is greater than a sixth preset value, to determine whether services provided by the master base station and the collaborative base station run normally. The fifth preset value is less than or equal to the third preset value, for example, 99% of the third preset value, and the sixth preset value is less than or equal to the fourth preset value, for example, 98% of the fourth preset value. This is not limited in this application.

It may be understood that, during actual application, in a process of testing a service of the base station 10 by using the test CPE 11, the test CPE 11 may move. For example, the test CPE 11 moves from a base station to another base station. In this case, if the test CPE 11 further needs to be used to test the to-be-tested base station 10, an identifier of the test CPE 11 needs to be sent to the to-be-tested base station 10.

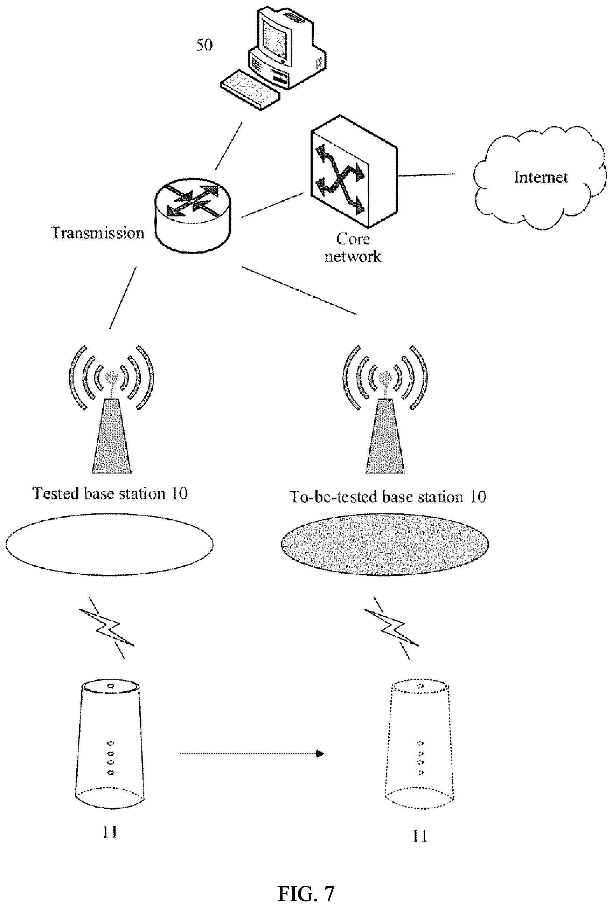

FIG. 7 is a diagram of a scenario in which the test CPE 11 moves from a tested base station 10 to a to-be-tested base station 10. As shown in FIG. 7, the test CPE 11 has moved from the tested base station 10 to the to-be-tested base station 10. If the to-be-tested base station 10 needs to be tested by using the test CPE 11, the tested base station 10 needs to send the identifier of the test CPE 11 to the to-be-tested base station 10.

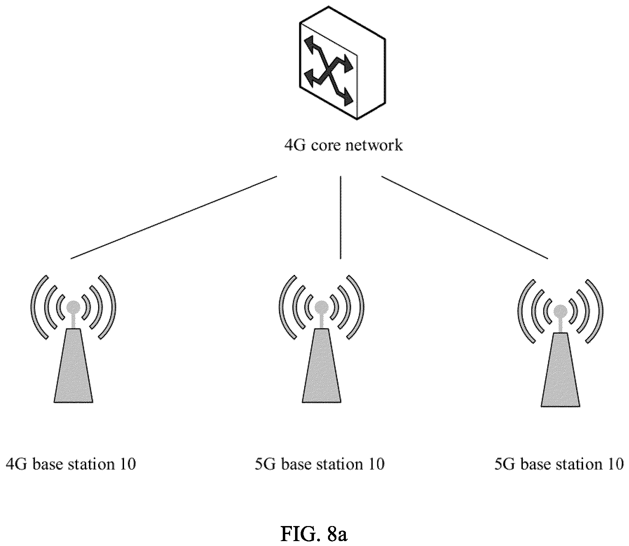

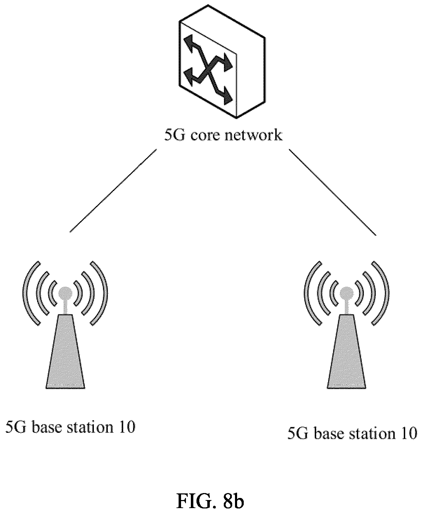

However, a manner in which the tested base station 10 sends the identifier of the test CPE 11 to the to-be-tested base station 10 varies according to different 5G networking manners. Specifically, the 5G networking manners are usually classified into non-standalone (Non-Standalone, NSA) networking and standalone (Standalone, SA) networking. The NSA means networking formed by a 5G base station with the help of an existing 4G core network. In the NSA networking, for example, as shown in FIG. 8a, a core network is the existing 4G core network, and the 5G base station accesses the 4G core network to work together with a 4G base station (also referred to as a master base station (MeNB)). In this networking manner, the tested base station 10 sends the identifier of the test CPE 11 to the to-be-tested base station 10, and further needs to interact with the master base station. The SA means networking including a 5G core network and a 5G base station. In the SA networking manner, for example, as shown in FIG. 8b, a core network is a 5G core network, and the 5G base station accesses the 5G core network to work.

Based on the foregoing two different networking manners, the following describes a manner in which a target base station 10" obtains the identifier of the test CPE 11 when the target base station 10" is tested by using the test CPE 11. For ease of understanding, a tested base station is referred to as a source base station, and a to-be-tested base station is referred to as a target base station. Specifically,

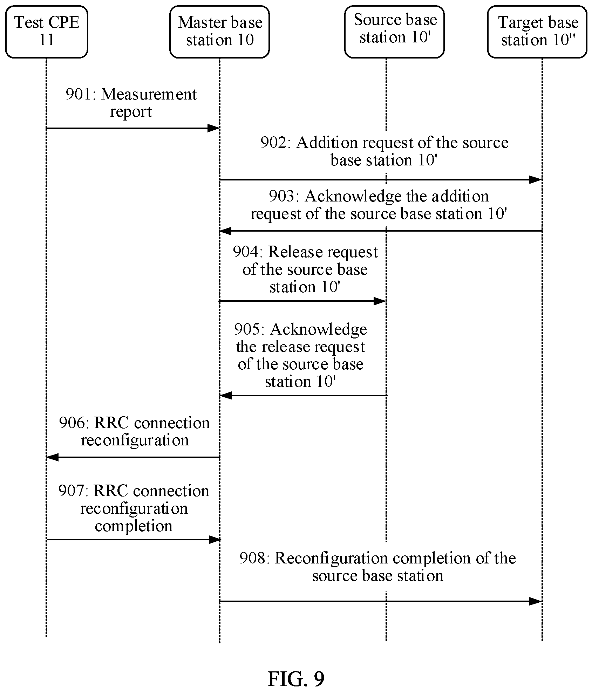

FIG. 9 shows an interaction process when the target base station 10" obtains the identifier of the test CPE 11 in an NSA scenario. The interaction process includes the following steps.

901: The test CPE 11 sends a measurement report (Measurement Report) to a master base station 10. That is, before accessing a network of the target base station 10", the test CPE 11 needs to send the measurement report to the master base station 10, and the master base station 10 determines whether a handover condition is met. The handover condition may be that strength of a network connection between the test CPE 11 and a source base station 10' is lower than a threshold (for example, -70 decibels (db)), and the test CPE 11 is in a network coverage area of the target base station 10". This is not limited in this application.

902: The master base station 10 sends an addition request (Addition Request) of the source base station 10' to the target base station 10". After determining that the handover condition is met, the master base station 10 sends, to the target base station 10", a request for adding the test CPE 11. The request includes an identifier such as a TMSI and a trace ID of the test CPE 11 saved by the source base station 10'.

903: The target base station 10" acknowledges the addition request of the source base station 10' sent by the master base station 10 (Addition Request Acknowledge). That is, after receiving the identifier of the test CPE 11, the target base station 10" verifies the identifier, and after the verification succeeds, acknowledges the addition request to the master base station 10. In some implementations, a manner in which the target base station 10" verifies the identifier of the test CPE 11 includes: The network management device 50 sends the identifier of the test CPE 11 to the master base station 10 and the target base station 10" in advance, and both the master base station 10 and the target base station 10" store the identifier. After receiving the addition request of the test CPE 11 sent by the master base station 10, the target base station 10" matches the received identifier of the test CPE 11 with the stored identifier, and when the matching succeeds, acknowledges, to the master base station 10, the request for adding the test CPE 11. It may be understood that, in some implementations, to improve service test efficiency of the target base station 10", the identifier of the test CPE 11 received by the target base station 10" may not be verified. That is, 903 may be omitted. This is not limited in this application.

That is, after 903 and 902, the target base station 10" can obtain the identifier of the test CPE 11.

904: The master base station 10 sends a release request (Release Request) of the source base station 10' to the source base station 10'. That is, after the target base station 10" acknowledges the addition request to the master base station 10, the master base station 10 sends, to the source base station 10, a request for releasing the test CPE 11. After receiving the request, the source base station 10' deletes the identifier of the test CPE 11 from identifiers of accessed CPE devices.

905: The source base station 10' acknowledges the release request of the source base station 10' to the master base station 10 (Release Request Acknowledge).

906: The master base station 10 sends a connection reconfiguration instruction (CONN RECFG) to the test CPE 11. In some implementations, after the source base station 10' deletes the identifier of the test CPE 11, the master base station 10 sends the connection reconfiguration instruction to the test CPE 11 according to a radio resource control protocol (Radio Resource Control, RRC). The test CPE 11 accesses the network of the target base station 10" based on the instruction.

907: The test CPE 11 sends RRC connection reconfiguration complete information (CONN Complete) to the master base station 10. After completing RRC connection reconfiguration, the test CPE 11 sends, to the master base station 10, information indicating that the RRC connection reconfiguration is completed.

908: The master base station 10 sends reconfiguration complete (RECFG Complete) information of the source base station 10' to the target base station 10". That is, after determining that the test CPE 11 completes the RRC connection reconfiguration, the master base station 10 sends, to the target base station 10", information indicating that the source base station 10' completes reconfiguration. In this case, the target base station 10" may acknowledge that the test CPE 11 has accessed the network of the target base station 10".

After the foregoing interaction process, the target base station 10" may obtain the identifier of the test CPE 11, and the test CPE 11 also accesses the target base station 10". In this way, a service of the target base station 10" can be tested by using the test CPE 11. A specific test process is similar to the process shown in FIG. 5, that is, the network management device 50 controls the target base station 10" to send a test instruction to the test CPE 11, modifies a BSR sent by the test CPE 11 to a first preset value, and then when the test CPE 11 sends to-be-transmitted data based on a network transmission rate corresponding to the first preset value, monitors, at a MAC layer of the target base station 10", whether the data transmission rate is greater than a second preset value. For details, refer to the foregoing related descriptions. Details are not described herein again.

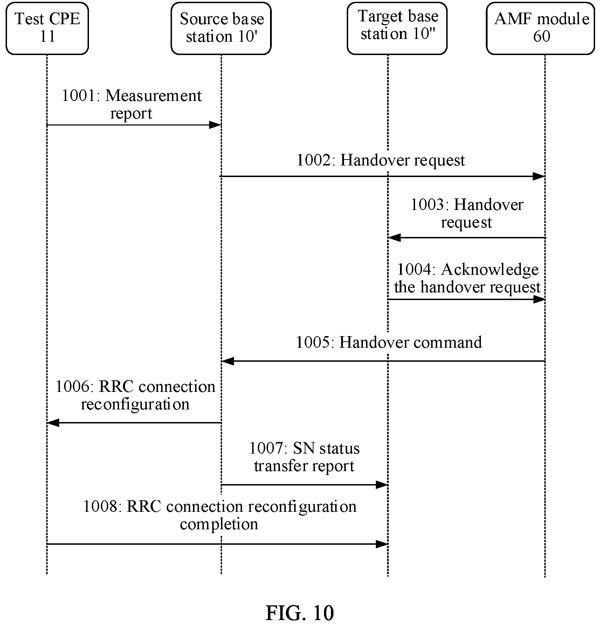

The following describes an interaction process when the target base station 10" obtains the identifier of the test CPE 11 in the SA scenario. It should be noted that in the SA scenario, there are two handover manners between the source base station 10' and the target base station 10". One is an Xn interface-based handover, and the other is an Ng interface-based handover. With reference to FIG. 10, the following describes a schematic flowchart of the Ng interface-based handover in the SA scenario. A main difference from FIG. 9 lies in that, in the SA scenario, there is no master base station (4G base station), but an access and mobility management function (access and mobility management function, AMF) module 60 of a core network directly participates in managing a handover of the test CPE 11 between the source base station 10' and the target base station 10". Details are as follows:
1001: The test CPE 11 sends a measurement report to the source base station 10'. Herein, refer to the related descriptions of 901. Details are not described again.
1002: The source base station 10' sends a handover request (Handover Request) to the AMF module 60. That is, when a handover condition is met, the source base station 10' sends the handover request to the AMF module 60. Similarly, the request includes an identifier of the test CPE 11.
1003: The AMF module 60 sends the handover request (Handover Request) to the target base station 10". After receiving the handover request sent by the source base station 10', the AMF module 60 sends the handover request to the target base station 10".
1004: The target base station 10" acknowledges the handover request to the AMF module 60 (Handover Request Acknowledge). After verifying the identifier of the test CPE 11, the target base station 10" acknowledges the handover request to the AMF module 60. For a manner in which the target base station 10" verifies the identifier of the test CPE 11, refer to related descriptions in FIG. 9. Details are not described herein again.
1005: The AMF module 60 sends a handover command (Handover Command) to the source base station 10'. After receiving the handover request acknowledgment from the target base station 10", the AMF module 60 sends the handover command to the source base station 10.
1006: The source base station 10' sends an RRC connection reconfiguration instruction (RRC Reconfiguration) to the test CPE 11. Herein, refer to foregoing related descriptions. Details are not described again.
1007: The source base station 10' sends a status transfer report (SN Status Transfer) of the source base station 10' to the target base station 10".
1008: The test CPE 11 sends RRC connection reconfiguration complete information (RRC Reconfiguration Complete) to the target base station 10". For details, refer to the foregoing related descriptions. After receiving the RRC connection reconfiguration complete information sent by the test CPE 11, the target base station 10" determines that the test CPE 11 has accessed the network of the target base station 10".

After the foregoing interaction process, the target base station 10" may obtain the identifier of the test CPE 11, and the test CPE 11 also accesses the target base station 10". In this way, a service of the target base station 10" can be tested by using the test CPE 11. A specific test process is similar to the process shown in FIG. 5, that is, the network management device 50 controls the target base station 10" to send a test instruction to the test CPE 11, modifies a BSR sent by the test CPE 11 to a first preset value, and then when the test CPE 11 sends to-be-transmitted data based on a network transmission rate corresponding to the first preset value, monitors, at a MAC layer of the target base station 10", whether the data transmission rate is greater than a second preset value. For details, refer to the foregoing related descriptions. Details are not described herein again.

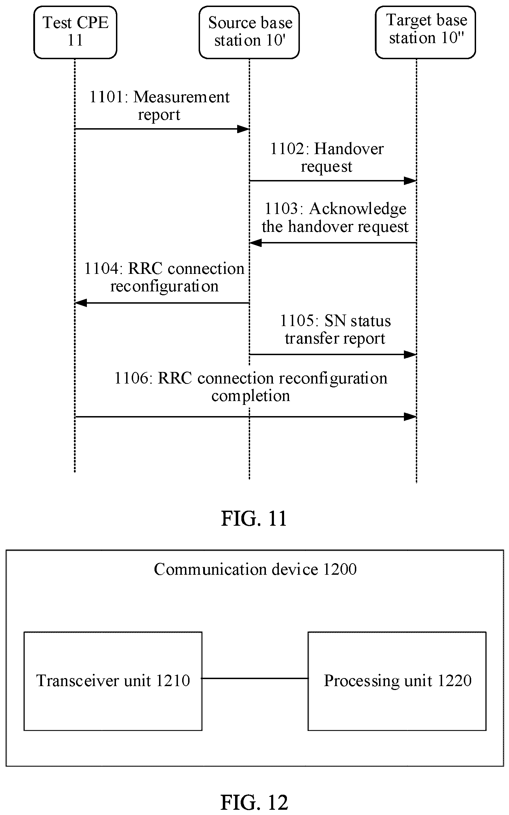

FIG. 11 shows an interaction process when the target base station 10" obtains the identifier of the test CPE 11 in another SA scenario, that is, when an Xn interface is used for handover. A difference from FIG. 10 lies in that the AMF module 60 of the core network does not need to participate in management, and interaction is limited to only the test CPE 11, the source base station 10', and the target base station 10". This effectively reduces a load of the core network and reduces a handover delay. For parts that are the same as or similar to those in FIG. 10, refer to the foregoing related descriptions. Details are not described in the following. The process specifically includes the following steps.

1101: The test CPE 11 sends a measurement report to the source base station 10'.

1102: The source base station 10' sends a handover request to the target base station 10".

1103: The target base station 10" acknowledges the handover request to the source base station 10'.

1104: The source base station 10' sends an RRC connection reconfiguration request to the test CPE 11.

1105: The source base station 10' sends an SN status transfer report to the target base station 10".

1106: The test CPE 11 sends RRC connection reconfiguration complete information to the target base station 10".

After the foregoing interaction process, the target base station 10" may obtain the identifier of the test CPE 11, and the test CPE 11 also accesses the target base station 10". In this way, a service of the target base station 10" can be tested by using the test CPE 11. A specific test process is similar to the process shown in FIG. 5, that is, the network management device 50 controls the target base station 10" to send a test instruction to the test CPE 11, modifies a BSR sent by the test CPE 11 to a first preset value, and then when the test CPE 11 sends to-be-transmitted data based on a network transmission rate corresponding to the first preset value, monitors, at a MAC layer of the target base station 10", whether the data transmission rate is greater than a second preset value. For details, refer to the foregoing related descriptions. Details are not described herein again.

FIG. 12 is a diagram of a structure of a communication device 1200 according to this application. As shown in FIG. 12, the communication device 1200 includes a transceiver unit 1210 and a processing unit 1220. The transceiver unit 1210 is configured to implement a function of receiving instructions or sending a request of the communication device 1200, and the processing unit 1220 is configured to implement a processing operation required by the communication device 1000 based on the received instructions. For operations performed by the units and specific implementation processes, refer to related descriptions in FIG. 5, FIG. 9, FIG. 10, and FIG. 11. Details are not described herein again.

In some implementations, the communication device 1200 may be the terminal device in the foregoing implementations, for example, a CPE device, or may be a chip configured to implement the terminal device in the foregoing implementations. This is not limited in this application.

In some other implementations, the communication device 1200 may be the network device in the foregoing implementations, for example, the base station 10 and the AMF module 60, or may be a chip configured to implement functions of the network device in the foregoing implementations. This is not limited in this application.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product runs on a mobile terminal, the steps in the foregoing method embodiments can be implemented by the mobile terminal.

In the foregoing embodiments, the description of each embodiment has respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/network device and method may be implemented in other manners. For example, the described apparatus/network device embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In the foregoing descriptions, for illustration instead of limitation, specific details such as a specific system structure and technology are provided, to thoroughly understand embodiments of this application. However, a person skilled in the art should understand that this application may also be implemented in other embodiments without these specific details. In other cases, detailed descriptions of a well-known system, apparatus, circuit, and method are omitted, so as not to obscure the description of this application with unnecessary detail.

It should be understood that the term "include" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if' may be interpreted as "when" or "once" or "in response to determining" or "in response to monitoring" depending on the context. Similarly, the phrase "if it is determined" or "if [a described condition or event] is monitored" may be interpreted, depending on the context, to mean "once determined" or "in response to determining" or "once [the described condition or event] is monitored" or "in response to monitoring [the described condition or event]".

In addition, in the description of the specification of this application and the appended claims, the terms "first", "second", "third", and the like are merely used for distinguishing descriptions, but cannot be understood as indicating or implying relative importance.

Reference to "one embodiment" or "some embodiments" described in the specification of this application means that one or more embodiments of this application include a specific feature, structure, or feature described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application, and these modifications and replacements shall fall within the protection scope of this application.

## Claims

1. A communication control method, comprising:
sending, by a network management device, a test instruction to a first network device, wherein
the test instruction instructs the first network device to determine a test terminal from terminal devices that access a network provided by the first network device, and instructs the first network device to allocate a resource block RB of a first preset size to the test terminal device, so that the test terminal has a data transmission capability corresponding to the RB of the first preset size, and the RB of the first preset size is determined based on an available RB of the first network device; and
monitoring, by the network management device, a transmission rate of the first network device at which the test terminal transmits to-be-transmitted data to the first network device by using the data transmission capability corresponding to the RB of the first preset size, and determining, based on a monitoring result, whether the first network device is able to provide a network service that meets a first preset condition, wherein
when detecting that the network transmission rate of the first network device has reached a first preset network transmission rate, the network management device determines that the first network device is able to provide the network service that meets the first preset condition; and
when not detecting that the network transmission rate of the first network device has reached the first preset network transmission rate, the network management device determines that the first network device is unable to provide the network service that meets the first preset condition.

2. The method according to claim 1, wherein the network service that meets the first preset condition comprises:
the network transmission rate of the first network device is greater than or equal to a network transmission rate corresponding to the RB of the first preset size.

3. The method according to claim 1, wherein the first network device comprises a base station.

4. The method according to claim 1, wherein the test terminal device comprises customer premise equipment CPE.

5. A communication control method, comprising:
receiving, by a first network device, a test instruction sent by a network management device, wherein
the test instruction instructs the first network device to determine a test terminal from terminal devices that access the first network device, and instructs the first network device to allocate a resource block RB of a first preset size to the test terminal device, so that the test terminal has a data transmission capability corresponding to the RB of the first preset size, and the RB of the first preset size is determined based on an available RB of the first network device; and
when the test terminal transmits to-be-transmitted data to the first network device by using the data transmission capability corresponding to the RB of the first preset size, reporting, by the first network device, a transmission rate to the network management device, so that the network management device determines, based on the transmission rate reported by the first network device, whether the first network device is able to provide a network service that meets a first preset condition, wherein
when the network transmission rate of the first network device has reached a first preset network transmission rate, it is determined that the first network device is able to provide the network service that meets the first preset condition, and
when the network transmission rate of the first network device has reached the first preset network transmission rate, it is determined that the first network device is unable to provide the network service that meets the first preset condition.

6. The method according to claim 5, wherein the first network device allocates the resource block RB of the first preset size to the test terminal device in the following manner:
after the first network device receives a first buffer status report BSR sent by the test terminal device, modifying, by the first network device to a first preset value based on the test instruction, a first BSR value of the received first BSR sent by the test terminal; and
allocating, by the first network device, an RB of the first preset size corresponding to the first preset value to the test terminal device.

7. The method according to claim 6, wherein the first preset network transmission rate is greater than or equal to a network transmission rate corresponding to the first preset RB.

8. The method according to claim 5, wherein the first network device comprises a base station.

9. The method according to claim 5, wherein the test terminal device comprises customer premise equipment CPE.

10. A communication control method, comprising:
sending, by a network management device, a test instruction to a first network device, wherein
the test instruction instructs the first network device to determine a test terminal from terminal devices that access a network provided by the first network device, and instructs the first network device to allocate a resource block RB of a first preset size to the test terminal device, so that the test terminal has a data transmission capability corresponding to the RB of the first preset size, and the RB of the first preset size is determined based on an available RB of the first network device;
receiving, by the first network device, the test instruction, and after receiving a first BSR sent by the test terminal, allocating the RB of the first preset size to the test terminal according to the test instruction;
when the test terminal transmits to-be-transmitted data to the first network device by using the network transmission capability corresponding to the RB of the first preset size, reporting, by the first network device, a transmission rate to the network management device; and
determining, by the network management device based on the transmission rate reported by the first network device, whether the first network device is able to provide a network service that meets a first preset condition, wherein
when determining that the network transmission rate of the first network device has reached a first preset network transmission rate, the network management device determines that the first network device is able to provide the network service that meets the first preset condition, and
when determining that the network transmission rate of the first network device has not reached the first preset network transmission rate, the network management device determines that the first network device is unable to provide the network service that meets the first preset condition.

11. The method according to claim 10, wherein the first network device allocates the resource block RB of the first preset size to the test terminal device in the following manner:
after the first network device receives the first buffer status report BSR sent by the test terminal device, modifying, by the first network device to a first preset value based on the test instruction, a first BSR value of the received first BSR sent by the test terminal; and
allocating, by the first network device, an RB of the first preset size corresponding to the first preset value to the test terminal device.

12. The method according to claim 6, wherein the first preset network transmission rate is greater than or equal to a network transmission rate corresponding to the first preset RB.

13. The method according to claim 10, further comprising:
sending, by the network management device, a test instruction to a second network device, wherein the second network device is a collaborative device of the first network device, wherein
the test instruction also instructs the second network device to allocate a resource block RB of a second preset size to the test terminal device, so that the test terminal has a data transmission capability corresponding to the RB of the second preset size when transmitting data to the second network device, and the RB of the second preset size is determined based on an available RB of the second network device;
receiving, by the second network device, the test instruction, and after receiving a second BSR sent by the test terminal, allocating the RB of the second preset size to the test terminal according to the test instruction;
when the test terminal transmits to-be-transmitted data to the second network device by using the network transmission capability corresponding to the RB of the second preset size, reporting, by the second network device, a transmission rate to the network management device; and
determining, by the network management device based on the transmission rate reported by the second network device, whether the second network device is able to provide a network service that meets a second preset condition, wherein
when determining that the network transmission rate of the second network device has reached a second preset network transmission rate, the network management device determines that the second network device is able to provide the network service that meets the second preset condition, and
when determining that the network transmission rate of the second network device has not reached the second preset network transmission rate, the network management device determines that the second network device is unable to provide a network service that meets the second preset condition.

14. The method according to claim 13, wherein the second preset network transmission rate is greater than or equal to a network transmission rate corresponding to the RB of the second preset size.

15. The method according to claim 10, further comprising:
detecting, by a third network device, that the test terminal device accesses a network provided by the third network device; and testing, by the network management device, the third network device by using the test terminal device, and sending a test instruction to the third network device, wherein
the test instruction also instructs the third network device to allocate a resource block RB of a third preset size to the test terminal device, so that the test terminal has a data transmission capability corresponding to the RB of the third preset size when transmitting data to the third network device, and the RB of the third preset size is determined based on an available RB of the third network device;
receiving, by the third network device, the test instruction, and after receiving a third BSR sent by the test terminal, allocating the RB of the third preset size to the test terminal according to the test instruction;
when the test terminal transmits to-be-transmitted data to the third network device by using the network transmission capability corresponding to the RB of the third preset size, reporting, by the third network device, a transmission rate to the network management device; and
determining, by the network management device based on the transmission rate reported by the third network device, whether the third network device is able to provide a network service that meets a third preset condition, wherein
when determining that the network transmission rate of the third network device has reached a third preset network transmission rate, the network management device determines that the network device is able to provide the network service that meets the third preset condition, and
when determining that the network transmission rate of the third network device has not reached the third preset network transmission rate, the network management device determines that the network device is unable to provide the network service that meets the third preset condition.

16. The method according to claim 15, wherein the third preset network transmission rate is greater than or equal to a network transmission rate corresponding to the RB of the third preset size.

17. The method according to claim 10, wherein the first network device comprises a base station.

18. The method according to claim 13, wherein the second network device comprises a base station.

19. The method according to claim 15, wherein the third network device comprises a base station.

20. The method according to claim 10, wherein the test terminal device comprises customer premise equipment CPE.

21. A readable medium, wherein the readable medium stores instructions, and when the instructions are executed on an electronic device, the electronic device is enabled to perform the communication control method according to any one of claims 1 to 20.

22. A communication device, wherein the communication device comprises:
a memory, configured to store instructions for execution by one or more processors of the communication device; and
a processor that is one of processors of the communication device, and is configured to perform the communication control method according to any one of claims 1 to 20.
